# EUROPÄISCHE PATENTSCHRIFT

(11) **EP 2 087 248 B1**
(45) Veröffentlichungstag und Bekanntmachung des Hinweises auf die Patenterteilung: **20.01.2010**
(21) Anmeldenummer: 07819384.4
(22) Anmeldetag: 27.10.2007
(51) Int. Cl.: F16C 19/34

(54) **KEGELROLLENLAGERUNG**
TAPERED ROLLER BEARING
ROULEMENT À ROULEAUX CONIQUES

(30) Priorität: 04.11.2006 DE 102006052045
(43) Veröffentlichungstag der Anmeldung: 12.08.2009
(73) Patentinhaber: Aktiebolaget SKF, 415 50 Göteborg (SE)
(72) Erfinder: KRUG, Udo, 97531 Theres (DE); OLSCHEWSKI, Armin, 97422 Schweinfurt (DE); STUBENRAUCH, Arno, 97491 Aidhausen (DE); DE VRIES, Alexander Jan Carel, 4300 KA Tiel (NL)
(74) Vertreter: Kohl, Thomas
(86) Internationale Anmeldenummer: PCT/EP2007/009341
(87) Internationale Veröffentlichungsnummer: WO 2008/052715

(56) Entgegenhaltungen:
- EP-A- 0 756 095
- EP-A- 1 249 623
- EP-A- 1 510 706
- EP-A- 1 519 062
- EP-A- 1 647 727
- US-A- 6 086 261

## Beschreibung

Die Erfindung betrifft eine-Kegelrollenlagerung.

Anders als bei Gleitlagern wird bei Wälzlagern bekanntlich die Last unter einem Abwälzen übertragen, so dass die Reibung insbesondere auch bei niedrigen Drehzahlen und beim Anfahren gering ist. Die geringe Anlaufreibung und der Umstand, dass kein Einlaufen notwendig ist, sind insbesondere bei Fahrzeugen wichtige Vorteile. Der geringen Reibung entsprechen mit Vorteil geringe Leistungsverluste. Unter den Wälzlagern ist dabei das Kegelrollenlager ein nicht nur in Fahrzeugen weitverbreiteter Wälzlagertyp. Im Sinne eines nachhaltigen Wirtschaftens mit den verfügbaren Rohstoff und Energiereserven wird weiterhin, und nichtausschließlich auf das Gebiet der Fahrzeuge begrenzt, nach Möglichkeiten gesucht, die Leistungsverluste weiter zu senken. Das Dokument EP 1647727 A zeigt ein Kegelrollenlager bei dem die Wälzkörperstirnseiten mit einer Rauhigkeit Ra zwischen 0,05 μm und 0,20 μm vorliegen. Das Dokument EP 1249623 A zeigt ein Kegelrollenlager bei dem die Abrollflächen für die Wälzkörper und die Wälzkörperaußenmäntel mit einer Rauhigkeit zwischen 0,1 μm und 0,3 μm ausgebildet sind.

Eine Aufgabe der Erfindung ist es daher, eine verbesserte Kegelrollenlagerung derart zu schaffen, so dass sich bei deren Betrieb besonders geringe Leistungsverluste ergeben.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet eine Kegelrollenlagerung folgende Merkmale:
- Eine Anzahl von kegelstumpfartigen Wälzkörpern einer Kegelrollenreihe beträgt, gerundet als ganze Zahl, 90 % bis 60 % der vollrolligen Bestückung,
- die Abrollflächen für die Wälzkörper, die Wälzkörperaußenmäntel und diejenigen Flächen der Wälzkörperstirnseiten und Oberflächen wenigstens eines Laufbahnelements, zwischen denen bei bestimmungsgemäßem Betreiben der Lagerung eine Berührung stattfindet, sind mit einer Rauhigkeit Rₐ kleiner gleich 0,10 µm ausgebildet, und
- die Wälzkörper sind in Umfangsrichtung zueinander beabstandet in einem Käfig angeordnet.

Die Erfindung beruht dabei auf der Erkenntnis, dass besagte Anzahl von Wälzkörpern unterhalb der vollrolligen Bestückung für die meisten Anwendungen eine hinreichende Tragfähigkeit besitzt, aber mit besonderem Vorteil eine Einsparung an Material und Gewicht erzielt wird, so dass mit Vorteil durch die Materialeinsparung die Rohstoffreserven geschont werden und infolge des geringeren, bei Betrieb zu wälzenden Gewichts der Wälzkörper, Leistungsverluste reduziert sind. Weiterhin wird durch die Ausbildung besagter Flächen mit einer sehr kleinen Rauhigkeit von kleiner 0,10 µm und in einer vorteilhaften Ausgestaltung von kleiner 0,06 µm die beim Abwälzen auftretende Reibung weiter herabgesetzt, so dass sich mit Vorteil die Leistungsverluste weiter reduzieren. Dabei sei besonders daraufhingewiesen, dass auch die Berührflächen zwischen den Wälzkörperstirnseiten und einer Oberfläche des Laufbahnelements, an dem Bereiche der Wälzkörperstimseiten bestimmungsgemäß anlaufen, ebenfalls mit besagter geringer Rauhigkeit ausgebildet sind. Auch der insbesondere aus einem Polymermaterial ausgebildete Käfig trägt im vorausgehend beschriebenen Sinne, beispielsweise gegenüber einem Blechkäfig, mit Vorteil zur Gewichtsreduzierung und zur Verbesserung der Reibverhältnisse bei.

In einer den Käfig betreffenden vorteilhaften Ausgestaltung ist wenigstens ein zwischen zwei benachbarten Wälzkörpern angeordneter Steg des Käfigs derart gestaltet, dass der Abstand dieser Wälzkörper zueinander bezüglich den Abständen der übrigen Nachbarschaftspaarungen von Wälzkörpern unterschiedlich ist, wobei insbesondere die Stege derart ausgebildet sind, dass alle Nachbarschaftspaarungen von Wälzkörpern einen unterschiedlichen Abstand zueinander aufweisen. Dies wirkt sich bei Betrieb der Kegelrollenlagerung mit besonderem Vorteil in Richtung einer verminderten Geräuschemission der Kegelrollenlagerung aus.

In einer weiteren vorteilhaften Ausgestaltung ist ein Seitenring des Käfigs an den durchmesserkleineren Stirnseiten der Wälzkörper derart ausgebildet, dass zwischen dem Seitenring und einem inneren Laufbahnelement ein Ringspalt mit vorgebbarer, insbesondere geringer Breite entsteht. Dadurch ist mit besonderem Vorteil ein bei Betrieb der Kegelrollenlagerung auftretender Pumpeffekt dahingehend beherrschbar, dass nur eine vorgebbare nötige Schmiermittelmenge, beispielsweise ein Öl, durch die Kegelrollenlagerung hindurch sozusagen durchgepumpt wird. Dies wirkt sich somit positiv in Richtung eines geringen Schmiermittelverbrauchs aus.

In einer weiteren vorteilhaften Ausgestaltung sind die Außenmäntel der Wälzkörper nach außen hin insbesondere ballig ausgebaucht und auch die Abrollflächen für die Wälzkörper zu den Wälzkörpern hin insbesondere ballig ausgebaucht. Dadurch entsteht ein reduzierter Berührbereich zwischen den Wälzkörpern und den Abrollflächen, was bei Betrieb der Kegelrollenlagerung mit Vorteil mit einer geringeren Reibung und damit einhergehend mit geringeren Leistungsverlusten verbunden ist, wobei die reduzierte Berührfläche für die meisten Belastungsfälle ausreichend ist und nicht zu kritischen mechanischen Spannungsverläufen führt. Darüber hinaus tragen alle vorgenannten Maßnahmen in Summe zu einer langen Gebrauchsdauer der Kegekollenlagerung bei.

In einer weiteren vorteilhaften Ausgestaltung ist bei einem Laufbahnelement der Kegelrollenlagerung mit einer Abrollfläche für die Wälzkörper und mit einem eine Innenseite aufweisenden Bord an einer der Stirnseiten der Wälzkörper, bei dem ein Bereich der Innenseite zum Berühren durch Bereiche der Wälzkörperstimseiten vorgesehen ist, bei einer Betrachtung, die von einem mittleren Bereich der Innenseite zwischen ihrem äußeren und inneren Rand ausgeht und entlang einer. Wälzkörperstirnseite radial hin zur Abrollfläche gerichtet ist, das Laufbahnelement in einem Übergangsbereich von der Innenseite hin zur Abrollfläche bezogen auf die Betrachtungsrichtung frei von einem Hinterschnitt ausgebildet.

Dabei wurde erkannt, dass bei gleichbleibender Oberflächenqualität der Abrollfläche sowie der zum Anlaufen der Wälzkörperstirnseiten vorgesehenen Innenseite des Bords des Laufbahnelements ein Hinterschnitt am Fuß des Bords zum Übergang hin zur Abrollfläche herstellungstechnisch und auch aus anderen Gründen nicht erforderlich ist. Damit kann mit Vorteil unter anderem bei gleichbleibender Festigkeit des Bords der Bord in Achsrichtung mit einer geringeren Dicke ausgebildet werden, wodurch sich wiederum auch ein kürzeres Laufbahnelement ausbilden lässt, womit mit Vorteil Material und Gewicht entsprechend eingespart wird.

Weiterhin ist es durch Verzicht auf den Hinterstich möglich, eine bestimmungsgemäße Berührfläche zwischen den Wälzkörperstirnseiten und der Innenseite des Bords durch entsprechendes Design von Wälzkörperstirnseiten und der Innenseite des Bords nahe zur Abrollfläche hin zu verlagern, wodurch mit besonderem Vorteil in besagter Berührfläche im wesentlichen ein Abrollen mit wenig Gleitanteilen stattfindet, so dass weniger Reibungsverluste entstehen und damit mit Vorteil Leistungsverluste gesenkt werden. Dabei sind die Innenseite des Bords und die Stirnseite der Wälzkörper insbesondere derart gestaltet, dass die bestimmungsgemäße Berührung von der Wälzkörperhauptachse aus in einem Bereich von 85 %, insbesondere 90 % bis 98 % des Radius der Wälzkörperstirnseite stattfindet.

In einer weiteren vorteilhaften Ausgestaltung ist der kegelstumpfartige Wälzkörper ausgehend von seinen beiden Stirnseiten mit jeweils einer Höhlung ausgebildet, wobei zwischen den Höhlungen ein mit Material des Wälzkörpers ausgefüllter Zwischenbereich verbleibt, dessen minimale axiale Dicke zwischen 20 bis 60 % der axialen Wälzkörperlänge ist.

Dabei wurde erkannt, dass sich bei derartiger Ausbildung des kegelstumpfartigen Wälzkörpers, bei Aufrechterhaltung guter wälzlagertechnischer Eigenschaften, mit Vorteil eine Einsparung an Material und an Gewicht erzielen lässt. Dabei werden durch die Materialeinsparung die Rohstoffreserven geschont und infolge des geringeren, bei Betrieb zu wälzenden Gewichts der Wälzkörper, Leistungsverluste reduziert sind. Weiterhin wurde erkannt, dass bei einem Unterschreiten der minimalen axialen Dicke von 20 % der axialen Wälzkörperlänge sich die wälzlagertechnischen Eigenschaften inakzeptabel verschlechtern. Andererseits wurde erkannt, dass die minimale axiale Dicke nicht größer als 60 % der axialen Wälzkörperlänge sein soll, da dies hinsichtlich Material- und Gewichtseinsparung kontraproduktiv wäre und weiterhin beim Abrollen des Wälzkörpers auf einer entsprechenden Abrollfläche an den Übergangsbereichen vom Außenmantel des Wälzkörpers hin zu seinen Stirnseiten unerwünscht hohe mechanische Spannungsspitzen auftreten würden. Dadurch, dass die Höhlungen eine gewisse Tiefe aufweisen und die Höhlungen in ihrem im wesentlichen zylindrischen Bereich einen Durchmesser zwischen 40 % bis 70 % des Wälzkörperaußendurchmessers an der die Öffnung der jeweiligen Höhlung beinhaltenden Stirnseite aufweisen bzw. eine Wandstärke des Wälzkörpers im Bereich der Höhlungen zwischen 15 % und 30 % des Wälzkörperaußendurchmessers an der die Öffnung der jeweiligen Höhlung beinhaltenden Stirnseite ist, werden besagte unerwünschte Spannungsspitzen dadurch verhindert, dass die axialen Enden des Wälzkörpers eine gewisse Einfederungsmöglichkeit nach innen hin aufweisen. Weiterhin ist zur Verhinderung besagter unerwünschter Spannungsspitzen der Wälzkörper in seinen Übergangsbereichen vom Außenmantel hin zu seinen Stirnseiten mit Verrundungen ausgebildet, die an die jeweilige Belastungsanforderung entsprechend angepasst ausgebildet sein können.

Weitere Vorteile, Merkmale und Einzelheiten ergeben sich aus den im folgenden beschriebenen Ausführungsbeispielen der Erfindung anhand der Figuren. Dabei zeigen:
- Figur 1: einen Längsschnitt durch den oberen Bereich eines einreihigen Kegelrollenlagers,
- Figur 2: eine Ausschnittsvergrößerung der Figur 1,
- Figur 3: eine Darstellung entsprechend der Figur 2 für eine andere Ausführungsform der Erfindung, und
- Figur 4: einen Längsschnitt durch einen besonderen, im Kegelrollenlager einsetzbaren Wälzkörper.

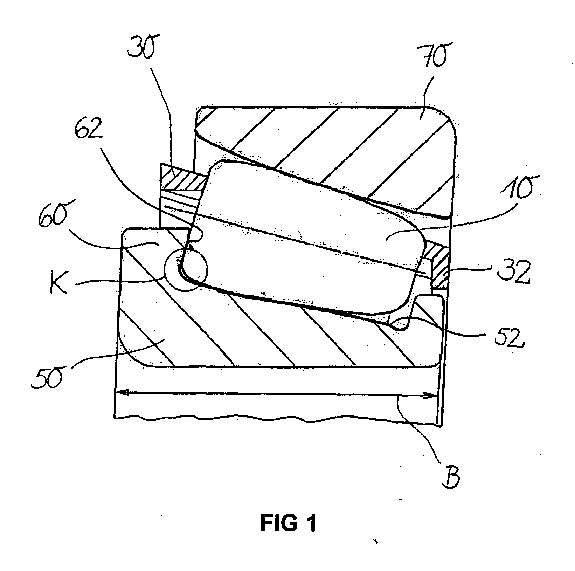

Die Figur 1 zeigt ein Ausführungsbeispiel der Erfindung einen Längsschnitt durch den oberen Bereich eines einreihigen Radialkegelrollenlagers. Dabei sind kegelstumpfartige Wälzkörper 10 zwischen einem äußeren Laufbahnelement 70 und einem inneren Laufbahnelement 50 angeordnet.

Die Wälzkörper 10 sind dabei in einem aus einem Polymermaterial ausgebildeten Käfig 30 angeordnet. Dabei sind die sich jeweils zwischen zwei benachbarten Wälzkörpern 10 angeordneter Steg des Käfigs 30 derart gestaltet, dass alle Nachbarschaftspaarungen von Wälzkörpern 10 einen unterschiedlichen Abstand zueinander aufweisen. Dies wirkt sich bei Betrieb des Kegelrollenlagers mit besonderem Vorteil in Richtung einer verminderten Geräuschemission aus. Weiterhin ist ein Seitenring 32 des Käfigs 30 an den durchmesserkleineren Stirnseiten der Wälzkörper 10 derart ausgebildet, dass zwischen dem Seitenring 32 und dem inneren Laufbahnelement 50 ein Ringspalt mit vorgebbarer, insbesondere geringer Breite entsteht. Dadurch ist mit besonderem Vorteil ein bei Betrieb der Kegelrollenlagers auftretender Pumpeffekt dahingehend beherrschbar, dass nur eine vorgebbare nötige Schmiermittelmenge, beispielsweise ein Öl, durch die Kegelrollenlagerung hindurch sozusagen durchgepumpt wird.

Das innere Laufbahnelement 50 umfasst am durchmessergrößeren Ende einen Bord 60 mit einer Innenseite 62, an der ein Bereich der durchmessergrößeren Stirnseiten der Wälzkörper 10 zum Anlaufen vorgesehen ist. Die den durchmessergrößeren Stirnseiten der Wälzkörper 10 unmittelbar gegenüberliegende Innenseite 62 des Bords 60 geht dabei frei von einem Hinterschnitt oder Hinterstich in die Abrollfläche 52 des inneren Laufbahnelements 50 über. Im Vergleich zu einem herkömmlichen vergleichbaren Laufbahnelement mit Hinterschnitt kann aufgrund des nicht vorhandenen Hinterschnitts der Bord 60 bei gleicher Festigkeit mit einer geringeren axialen Ausdehnung ausgebildet werden. Damit verkürzt sich mit Vorteil auch die Gesamtlänge B des inneren Laufbahnelements 50 gegenüber dem Stand der Technik.

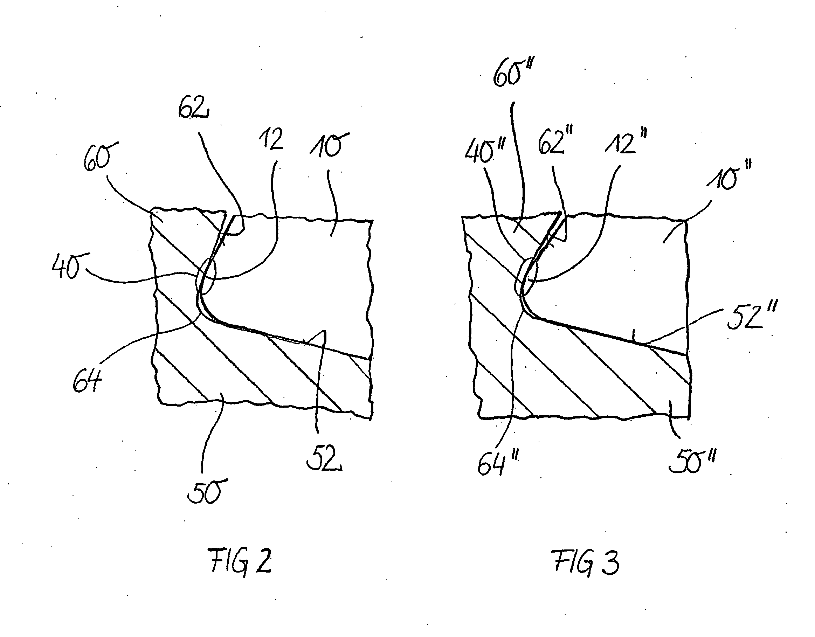

Die Figur 2 zeigt eine Ausschnittsvergrößerung des mit einem Kreis K markierten Bereichs der Figur 1. Aus der Figur 2 erkennt man, dass die Innenseite 62 des Bords 60, ausgehend von einem mittleren Bereich, zwischen ihrem inneren und äußeren Rand hin zur Abrollfläche 52 im wesentlichen eben ausgebildet ist und dann in Form eines einfach gekrümmten Bogens 64 in die Abrollfläche 52 für die Wälzkörper 10 übergeht, die ballig zu den Wälzkörpern 10 hin ausgebaucht ausgebildet ist. Dabei sind die Wälzkörper 10 in einem Außenbereich ihrer Stirnseite derart mit einer Ausbauchung 12 ausgebildet, dass der bestimmungsgemäße Berührbereich 40 zwischen den Wälzkörperstimseiten und der Innenseite 62 des Bords 60 mit den eingangs beschriebenen Vorteilen nahe hin zur Abrollfläche 52 gelegt ist.

In einem Übergangsbereich vom Außenmantel hin zu den Stirnseiten sind die Wälzkörper 10 mit entsprechenden Verrundungen ausgebildet, wobei die Außenmantelfläche zwischen den Übergangsbereichen ebenfalls ballig nach außen ausgebaucht ist.

Die Figur 3 zeigt als ein weiteres Ausführungsbeispiel der Erfindung einen ausschnittsweisen Längsschnitt entsprechend dem der Figur 2, wobei anstelle des ebenen Verlaufs der Innenseite 62 des Bords 60 der Figur 2 ein nach innen eingebauchter Verlauf tritt. Ansonsten gilt für die Figur 3 das vorausgehend zur Figur 3 Beschriebene entsprechend. Dabei werden in der Figur 3 für der Figur 2 entsprechende Bauelemente und Bereiche die gleichen Bezugszeichennummern wie bei der Figur 2, ergänzt um zwei Hochstriche verwendet. Dabei kann eine Ausbildung entsprechend der Figur 2 beispielsweise bei kleiner dimensionierten Kegelrollenlagern und eine Ausbildung entsprechend der Figur 3 bei eher größeren Kegelrollenlagern eingesetzt werden.

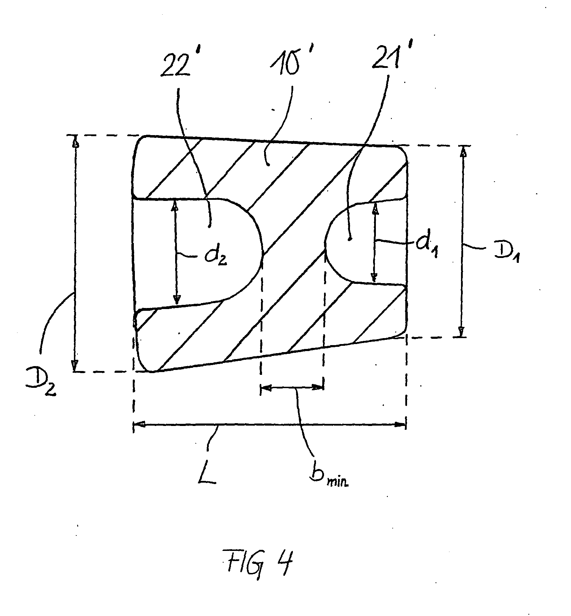

Die Figur 4 zeigt als ein Ausführungsbeispiel der Erfindung einen Längsschnitt durch einen kegelstumpfartigen Wälzkörper 10' als Alternative zu den Wälzkörpern 10. Dabei ist der Wälzkörper 10' ausgehend von seinen beiden Stirnseiten mit Höhlungen 21' und 22' ausgebildet. Zwischen den beiden Höhlungen 21' und 22' verbleibt ein mit Material des Wälzkörpers 10' ausgefüllter Zwischenbereich, dessen minimale axiale Dicke bₘᵢₙ ca. 25 % der axialen Wälzkörperlänge L ist. Gemäß dem allgemeinen Grundgedanken der Erfindung ist dabei besagte minimale axiale Dicke bₘᵢₙ zwischen 20 bis 60 %, insbesondere zwischen 20 und 40 % der axialen Wälzkörperlänge L ausgebildet.

Der Wälzkörper 10' ist dabei materialeinheitlich und einstückig insbesondere aus einem Stahl oder Keramik ausgebildet. Die Höhlungen 21' und 22' sind zum Zwischenbereich hin sphärisch ausgebildet, wobei die Höhlung 22' am durchmessergrößeren axialen Ende des Wälzkörpers 10' tiefer ausgebildet ist als die Höhlung 21' am durchmesserkleineren axialen Ende des Wälzkörpers 10'.

Die Höhlung 21' ist dabei in ihrem im wesentlichen zylindrischen Bereich mit einem Durchmesser d₁ ausgebildet, der in etwa 55 % des Wälzkörperaußendurchmessers D₁ an der die Öffnung der Höhlung 21' beinhaltenden Stirnseite des Wälzkörpers 10' ist. Weiterhin ist auch der Durchmesser d₂ der Höhlung 22' in ihrem im wesentlichen zylindrischen Bereich etwa 60 % des Wälzkörperaußendurchmessers D₂ an der die Öffnung der Höhlung 22' beinhaltenden Stirnseite des Wälzkörpers 10'. Weiterhin ist die Wandstärke des Wälzkörpers 10' im Bereich der Höhlungen 21' und 22' in etwa 20 % des Wälzkörperaußendurchmessers D₁ bzw. D₂. Gemäß dem allgemeinen Gedanken der Erfindung sind die Durchmesser d₁ und d₂ der Höhlungen 21' und 22' in deren im wesentlichen zylindrischen Bereich zwischen 40 bis 70 % des jeweiligen Wälzkörperaußendurchmessers D₁ bzw. D₂ und die Wandstärke des Wälzkörpers 10' ist im Bereich der Höhlungen 21' und 22' im Bereich zwischen 15 % bis 30 % des jeweiligen Wälzkörperaußendurchmessers D₁ bzw. D₂. Dadurch wird eine ausreichende Steifigkeit des Wälzkörpers 10' im Bereich der Höhlungen 21' und 22' erzielt, gleichzeitig aber zur Vermeidung der eingangs genannten, an sich unerwünschten hohen Spannungsspitzen, eine gewisse Einfederungsmöglichkeit des Wälzkörpers im Bereich der Höhlungen 21' und 22' erzielt.

Weiterhin wird zur Vermeidung der eingangs beschriebenen, an sich unerwünschten hohen Spannungsspitzen, der Wälzkörper 10' in Übergangsbereichen von seinem Außenmantel hin zu seinen Stirnseiten mit einer Verrundung ausgebildet, die von Einsatzfall zu Einsatzfall an die jeweilige Belastungsanforderung angepasst ausgebildet sein kann.

## Patentansprüche

1. Kegelrollenlagerung, beinhaltend folgende Merkmale:
- Eine Anzahl von kegelstumpfartigen Wälzkörpern (10,10',10") einer Kegelrollenreihe beträgt, gerundet als ganze Zahl, 90 % bis 60 % der vollrolligen Bestückung,
- die Abrollflächen (52,52") für die Wälzkörper (10,10',10"), die Wälzkörperaußenmäntel und diejenigen Flächen der Wälzkörperstimseiten und Oberflächen (62,62") wenigstens eines Laufbahnelements (50, 50", 70), zwischen denen bei bestimmungsgemäßem Betreiben der Lagerung eine Berührung stattfindet, sind mit einer Rauhigkeit Rₐ kleiner gleich 0,10 µm ausgebildet, und
- die Wälzkörper (10,10',10") sind in Umfangsrichtung zueinander beabstandet in einem Käfig (30) angeordnet.

2. Kegelrollenlagerung nach Anspruch 1, wobei die Mantelfläche der Wälzkörper nach außen ausgebaucht und wenigstens eine der Abrollflächen für die Wälzkörper zu den Wälzkörpern hin ausgebaucht ausgebildet sind und/oder wobei wenigstens eine der Abrollflächen für die Wälzkörper entsprechend einem zu den Wälzkörpern hin ausgebauchten Kegelstumpfmantel ausgebildet ist, wobei wenigstens eine der Ausbauchungen insbesondere ballig gestaltet ist.

3. Kegelrollenlagerung nach einem der Ansprüche 1 oder 2, wobei die Anzahl der Kegelstumpfartigen Wälzkörpern (10,10',10") gerundet als ganze Zahl 80 % bis 70 % der vollrolligen Bestückung beträgt und/oder wobei besagte Flächen mit einer Rauhigkeit Rₐ kleiner gleich 0,06 µm ausgebildet sind.

4. Kegelrollenlagerung nach einem der Ansprüche 1 bis 3, wobei wenigstens eine der besagten Flächen mit einem ECM-Verfahren erzeugt ist und/oder wobei wenigstens besagte Flächen der Wälzkörper mit einer isotropen Oberflächenstruktur ausgebildet und/oder gleitgeschliffen sind.

5. Kegelrollenlagerung nach einem der Ansprüche 1 bis 4, wobei wenigstens ein zwischen zwei benachbarten Wälzkörpern angeordneter Steg des Käfigs derart gestaltet ist, dass der Abstand dieser Wälzkörper zueinander bezüglich den Abständen der übrigen Nachbarschaftspaarungen von Wälzkörpern unterschiedlich ist, wobei die jeweils zwischen zwei benachbarten Wälzkörpern angeordneten Stege des Käfigs derart gestaltet sind, dass alle Nachbarschaftspaarungen von Wälzkörpern untereinander einen unterschiedlichen Abstand aufweisen und/oder wobei ein Seitenring des Käfigs an den durchmesserkleineren Stirnseiten der Wälzkörper derart ausgebildet ist, dass zwischen dem Seitenring und einem inneren Laufbahnelement ein Ringspalt mit einer Breite von kleiner gleich 3 mm entsteht, wobei der Ringspalt insbesondere eine Breite kleiner gleich 1,5 mm aufweist.

6. Kegelrollenlagerung nach einem der Ansprüche 1 bis 5, wobei der Käfig ein Polymermaterial umfassend ausgebildet und insbesondere PA, PP, PET, PTFE, PEEK, PVDF, PPS und/oder PI mit oder ohne weitere Füll- und/oder Verstärkungsmaterialen umfasst.

7. Kegelrollenlagerung nach einem der Ansprüche 1 bis 6, wobei ein Laufbahnelement der Kegelrollenlagerung für kegelstumpfartige Wälzkörper mit einer Abrollfläche für die Wälzkörper und mit einem eine Innenseite aufweisenden Bord an einer der Stirnseiten der Wälzkörper, bei dem ein Bereich der Innenseite zum Berühren durch Bereiche der Wälzkörperstimseiten vorgesehen ist, wobei bei einer Betrachtung, die von einem mittleren Bereich der Innenseite zwischen ihrem äußeren und inneren Rand ausgeht und entlang einer Wälzkörperstirnseite radial hin zur Abrollfläche gerichtet ist, das Laufbahnelement in einem Übergangsbereich von der Innenseite hin zur Abrollfläche bezogen auf die Betrachtungsrichtung frei von einem Hinterschnitt ausgebildet ist.

8. Kegelrollenlagerung nach einem der Ansprüche 1 bis 6, wobei ein Laufbahnelement der Kegelrollenlagerung für kegelstumpfartige Wälzkörper mit einer Abrollfläche für die Wälzkörper und mit einem eine Innenseite aufweisenden Bord an einer der Stirnseiten der Wälzkörper, bei dem ein Bereich der Innenseite zum Berühren durch Bereiche der Wälzkörperstimseiten vorgesehen ist, wobei bei einer von einem mittleren Bereich der Innenseite zwischen ihrem äußeren und inneren Rand ausgehenden, senkrecht hin zu Abrollfläche gerichteten Betrachtung das Laufbahnelement in einem Übergangsbereich von der Innenseite hin zur Abrollfläche frei von einem Hinterstich ausgebildet ist.

9. Kegelrollenlagerung nach einem der Ansprüche 7 oder 8, wobei die Innenseite wenigstens im Berührbereich zu den Wälzkörpern entsprechend einem ebenen Kegelstumpfmantel ausgebildet, wobei die Innenseite wenigstens im Berührbereich zu den Wälzkörpern entsprechend einem zum Inneren des Bordes hin eingebauchten Kegelstumpfmantel ausgebildet ist und/oder wobei bei Betrachtung des Längsschnitts die Innenseite in Form eines einfach gekrümmten Bogens in die Abrollfläche übergeht.

10. Kegelrollenlagerung nach einem der Ansprüche 7 bis 9, wobei eine axiale Länge des Laufbahnelements größer B·cos α und kleiner gleich 1,4·B·cos α ist, wobei B die axiale Länge eines Wälzkörpers ohne Berücksichtigung von stirnseitigen Vertiefungen und α der äußere Kontaktwinkel des Wälzkörpers ist.

11. Kegelrollenlagerung nach einem der Ansprüche 7 bis 10, wobei die bestimmungsgemäße Berührung zwischen der Wälzkörperstirnseite und der Innenseite von der Wälzkörperhautachse aus in einem Bereich von 85 % bis 98 % des Radius der Wälzkörperstirnseite stattfindet, wobei der Bereich insbesondere 90 % bis 98 % ist.

12. Kegelrollenlagerung nach einem der Ansprüche 7 bis 11, wobei wenigstens einer der Wälzkörper stirnseitig wenigstens im Berührbereich mit einer Ausbauchung ausgebildet ist, wobei insbesondere eine Einbauchung der Innenseite im Berührbereich bezüglich der Ausbauchung der Wälzkörperstirnseite mit einem größeren Krümmungsradius ausgebildet ist.

13. Kegelrollenlagerung nach einem der Ansprüche 1 bis 12, wobei der kegelstumpfartiger Wälzkörper ausgehend von seinen beiden Stirnseiten mit jeweils einer Höhlung ausgebildet ist, und zwischen den Höhlungen ein mit Material des Wälzkörpers ausgefüllter Zwischenbereich verbleibt, dessen minimale axiale Dicke zwischen 20 % bis 60 % der axialen Wälzkörperlänge ist, wobei die minimale axiale Dicke insbesondere zwischen 20 % und 40 % der axialen Wälzkörperlänge ist, wobei insbesondere ein Durchmesser eines im wesentlichen zylindrischen Bereichs wenigstens einer der Höhlungen zwischen 40 % bis 70 % des Wälzkörperaußendurchmessers an der die Öffnung der Höhlung beinhaltenden Stirnseite ist, wobei insbesondere eine mittlere Wandstärke des Wälzkörpers im Bereich wenigstens einer der Höhlung zwischen 15 % und 30 % des Wälzkörperaußendurchmessers an der die Öffnung der Höhlung beinhaltenden Stirnseite ist, wobei insbesondere die Wandstärke in im wesentlichen zylindrischen Bereich der Höhlung zwischen 15 % und 25% liegt, wobei die Höhlung am durchmessergrößeren axialen Ende des Wälzkörpers insbesondere eine größere axiale Tiefe aufweist als die Höhlung am durchmesserkleineren axialen Ende des Wälzkörpers, wobei insbesondere wenigstens eine der Höhlungen zum Zwischenbereich hin sphärisch ausgebildet ist, und/oder wobei der Wälzkörper insbesondere in wenigstens einem Übergangsbereich von seinem Außenmantel hin zu einer seiner Stirnseiten mit einer insbesondere an die jeweilige Belastungsanforderung angepassten Verrundung ausgebildet ist.

14. Kegelrollenlagerung nach einem der Ansprüche 1 bis 13, wobei der Wälzkörper materialeinheitlich und einstückig ausgebildet ist und/oder wobei der Wälzkörper aus Stahl oder Keramik ausgebildet ist.

## Claims

1. Tapered roller bearing, containing the following features:
- a number of frustoconical rolling bodies (10, 10', 10'') of a tapered roller row amounts, rounded to a whole number, to 90% to 60% of the full-roller outfit,
- the rolling surfaces (52, 52'') for the rolling bodies (10, 10', 10''), the rolling-body outer casings and those surfaces of the rolling-body end faces and surfaces (62, 62'') of at least one raceway element (50, 50'', 70), between which contact takes place during the intended operation of the bearing, are designed with a roughness Rₐ lower than or equal to 0.10 µm, and
- the rolling bodies (10, 10', 10'') are arranged, spaced apart from one another in the circumferential direction, in a cage (30).

2. Tapered roller bearing according to Claim 1, the surface area of the rolling bodies being designed to bulge outwards and at least one of the rolling surfaces for the rolling bodies being designed to bulge towards the rolling bodies, and/or at least one of the rolling surfaces for the rolling bodies being designed correspondingly to a cone frustum casing bulged towards the rolling bodies, at least one of the bulges having, in particular, a crowned configuration.

3. Tapered roller bearing according to either one of Claims 1 and 2, the number of frustoconical rolling bodies (10, 10', 10'') amounting, rounded to a whole number, to 80% to 70% of the full-roller outfit, and/or the said surfaces being designed with a roughness Rₐ lower than or equal to 0.06 µm.

4. Tapered roller bearing according to one of Claims 1 to 3, at least one of the said surfaces being generated by means of an ECM method, and/or at least the said surfaces of the rolling bodies being formed and/or vibration-ground with an isotropic surface structure.

5. Tapered roller bearing according to one of Claims 1 to 4, at least one cage web arranged between two adjacent rolling bodies being configured in such a way that the spacing between these rolling bodies is different with respect to the spacings of the remaining neighbouring pairings of rolling bodies, the cage webs arranged in each case between two adjacent rolling bodies being configured in such a way that all the neighbouring pairings of rolling bodies have a different spacing from one another and/or a side ring of the cage on the end faces of smaller diameter of the rolling bodies being designed in such a way that an annular gap with a width smaller than or equal to 3 mm occurs between the side ring and an inner raceway element, the annular gap having, in particular, a width smaller than or equal to 1.5 mm.

6. Tapered roller bearing according to one of Claims 1 to 5, the cage being designed to comprise a polymeric material and, in particular, comprising PA, PP, PET, PTFE, PEEK, PVDF, PPS and/or PI with or without further filling and/or reinforcing materials.

7. Tapered roller bearing according to one of Claims 1 to 6, a raceway element of the tapered roller bearing for frustoconical rolling bodies being provided with a rolling surface for the rolling bodies and with a rim which has an inside and is located around the end faces of the rolling bodies and in which a region of the inside is intended to be contacted by regions of the rolling-body end faces, and, in a view starting from a middle region of the inside between its outer and inner margin and directed along a rolling-body end face radially with respect to the rolling surface, the raceway element being designed to be free from an undercut in the transitional region from the inside towards the rolling surface with respect to the viewing direction.

8. Tapered roller bearing according to one of Claims 1 to 6, a raceway element of the tapered roller bearing for the frustoconical rolling bodies being provided with a rolling surface for the rolling bodies and with a rim which has an inside and is located on one of the end faces of the rolling bodies and in which a region of the inside is intended to be contacted by regions of the rolling-body end faces, and, in a view starting from a middle region of the inside between its outer and inner margin and directed perpendicularly with respect to the rolling surface, the raceway element being designed to be free from an undercut in the transitional region from the inside towards the rolling surface.

9. Tapered roller bearing according to either one of Claims 7 or 8, the inside being designed correspondingly to a planar cone frustum casing, at least in the region of contact with the rolling bodies, the inside being designed, at least in the region of contact with the rolling bodies, correspondingly to a cone frustum casing bulged towards the inside of the rim, and/or, in a view of the longitudinal section, the inside merging in the form of a simply curved arc into the rolling surface.

10. Tapered roller bearing according to one of Claims 7 to 9, an axial length of the raceway element being greater than B·cos α and smaller than or equal to 1.4·B·cos α, B being the axial length of a rolling body, without end-faced depressions being taken into account, and α being the outer contact angle of the rolling body.

11. Tapered roller bearing according to one of Claims 7 to 10, the intended contact between the rolling-body end face and the inside taking place, from the rolling-body main axis, in a region of 85% to 98% of the radius of the rolling-body end face, the region being, in particular, 90% to 98%.

12. Tapered roller bearing according to one of Claims 7 to 11, at least one of the rolling bodies being designed on the end face, at least in the contact region, with a bulge, in particular an inward bulge of the inside being designed, in the contact region, with a larger radius of curvature in relation to the outward bulge of the rolling-body end face.

13. Tapered roller bearing according to one of Claims 1 to 12, the frustoconical rolling body being designed, from each of its two end faces, with a cavity, and there remaining between the cavities an intermediate region which is filled with material in the rolling body and the minimal axial thickness of which is between 20% and 60% of the axial rolling-body length, the minimal axial thickness being, in particular, between 20% and 40% of the axial rolling-body length, in particular a diameter of an essentially cylindrical region of at least one of the cavities being between 40% and 70% of the rolling-body outside diameter on the end face containing the opening of the cavity, in particular a mean wall thickness of the rolling body in the region of at least one of the cavities being between 15% and 30% of the rolling-body outside diameter on the end face containing the opening of the cavity, in particular the wall thickness in the essentially cylindrical region of the cavity lying between 15% and 25%, the cavity having, at the axial end of the larger diameter of the rolling body, in particular, a greater axial depth than the cavity has at the axial end of the smaller diameter of the rolling body, in particular at least one of the cavities being designed spherically with respect to the intermediate region, and/or the rolling body being designed, in particular in at least one transitional region from its outer casing towards one of its end faces, with a rounding which, in particular, is adapted to the respective load requirement.

14. Tapered roller bearing according to one of Claims 1 to 13, the rolling body being formed in a materially unitary and one-piece manner, and/or the rolling body being formed from steel or ceramic.

## Revendications

1. Roulement à rouleaux coniques, contenant les caractéristiques suivantes :
- une pluralité de corps de roulement de forme tronconique (10, 10', 10") d'une rangée de rouleaux coniques constitue, arrondie à un nombre entier, 90% à 60% de tout l'équipement de rouleaux jointifs,
- les surfaces de roulement (52, 52") pour les corps de roulement (10, 10', 10"), les enveloppes extérieures des corps de roulement et les faces des côtés frontaux des corps de roulement et les surfaces (62, 62") d'au moins un élément de piste de roulement (50, 50", 70) entre lesquelles a lieu un contact dans le cas d'un fonctionnement correct du roulement, sont réalisées avec une rugosité Rₐ inférieure ou égale à 0,10 µm, et
- les corps de roulement (10, 10', 10") sont disposés dans une cage (30) à distance les uns des autres dans la direction périphérique.

2. Roulement à rouleaux coniques selon la revendication 1, dans lequel la surface d'enveloppe des corps de roulement est renflée vers l'extérieur et au moins l'une des surfaces de roulement pour les corps de roulement est réalisée sous forme renflée vers les corps de roulement et/ou au moins l'une des surfaces de roulement pour les corps de roulement est réalisée de manière correspondant à une enveloppe tronconique renflée vers les corps de roulement, au moins l'un des renflements étant notamment configuré sous forme bombée.

3. Roulement à rouleaux coniques selon l'une quelconque des revendications 1 ou 2, dans lequel le nombre des corps de roulement de forme tronconique (10, 10', 10"), arrondi à un nombre entier, constitue 80% à 70% de tout l'équipement de rouleaux jointifs, et/ou dans lequel lesdites faces sont réalisées avec une rugosité Rₐ inférieure ou égale à 0,06 µm.

4. Roulement à rouleaux coniques selon l'une quelconque des revendications 1 à 3, dans lequel au moins l'une desdites faces est produite au moyen d'un procédé d'usinage électrochimique ECM, et/ou dans lequel au moins lesdites faces des corps de roulement sont réalisées et/ou meulées avec une structure de surface isotrope.

5. Roulement à rouleaux coniques selon l'une quelconque des revendications 1 à 4, dans lequel au moins une nervure de la cage disposée entre deux corps de roulement adjacents est configurée de telle sorte que l'espacement de ces corps de roulement l'un par rapport à l'autre est différent par rapport aux espacements des autres paires adjacentes de corps de roulement, les nervures de la cage disposées à chaque fois entre deux corps de roulement adjacents étant configurées de telle sorte que toutes les paires adjacentes de corps de roulement présentent un espacement différent les unes des autres et/ou une bague latérale de la cage étant réalisée sur les côtés frontaux de plus petit diamètre des corps de roulement de telle sorte qu'entre la bague latérale et un élément de piste de roulement interne, soit formée une fente annulaire ayant une largeur inférieure ou égale à 3 mm, la fente annulaire présentant notamment une largeur inférieure ou égale à 1,5 mm.

6. Roulement à rouleaux coniques selon l'une quelconque des revendications 1 à 5, dans lequel la cage est réalisée à base d'un matériau polymère et notamment comprend du PA, PP, PET, PTFE, PEEK, PVDF, PPS et/ou PI avec ou sans autres matériaux de charge et/ou de renforcement.

7. Roulement à rouleaux coniques selon l'une quelconque des revendications 1 à 6, dans lequel un élément de piste de roulement du roulement à rouleaux coniques pour corps de roulement de forme tronconique est pourvu d'une surface de roulement pour les corps de roulement et d'un bord présentant un côté interne contre l'un des côtés frontaux des corps de roulement, une région du côté interne étant prévue pour venir en contact avec des régions des côtés frontaux des corps de roulement, l'élément de piste de roulement étant réalisé, vu à partir d'une région centrale du côté interne entre son bord extérieur et son bord intérieur, et le long d'un côté frontal des corps de roulement radialement vers la face de roulement, de manière exempte de contre-dépouille dans une région de transition depuis le côté interne vers la face de roulement par rapport à la direction d'observation.

8. Roulement à rouleaux coniques selon l'une quelconque des revendications 1 à 6, dans lequel un élément de piste de roulement du roulement à rouleaux coniques pour corps de roulement de forme tronconique est pourvu d'une surface de roulement pour les corps de roulement et d'un bord présentant un côté interne contre l'un des côtés frontaux des corps de roulement, une région du côté interne étant prévue pour venir en contact avec des régions des côtés frontaux des corps de roulement, l'élément de piste de roulement étant réalisé, vu à partir d'une région centrale du côté interne entre son bord extérieur et son bord intérieur, perpendiculairement à sa surface de roulement, de manière exempte de contre-dépouille dans une région de transition du côté interne vers la surface de roulement.

9. Roulement à rouleaux coniques selon l'une quelconque des revendications 7 ou 8, dans lequel le côté interne, au moins dans la région de contact avec les corps de roulement, est réalisé de manière correspondant à une enveloppe tronconique plane, le côté interne, au moins dans la région de contact avec les corps de roulement, étant réalisé de manière correspondant à une enveloppe tronconique rentrée vers l'intérieur du bord, et/ou vu en coupe longitudinale, le côté interne se prolongeant en forme d'arc de courbure simple dans la surface de roulement.

10. Roulement à rouleaux coniques selon l'une quelconque des revendications 7 à 9, dans lequel une longueur axiale de l'élément de piste de roulement est supérieure à B*cos a et inférieure ou égale à 1,4*B*cos α, B étant la longueur axiale d'un corps de roulement sans tenir compte des renfoncements du côté frontal et α étant l'angle de contact extérieur du corps de roulement.

11. Roulement à rouleaux coniques selon l'une quelconque des revendications 7 à 10, dans lequel le contact correct entre le côté frontal du corps de roulement et le côté interne depuis l'axe principal du corps de roulement a lieu dans une plage de 85% à 98% du rayon du côté frontal du corps de roulement, la plage étant notamment dé 90% à 98%.

12. Roulement à rouleaux coniques selon l'une quelconque des revendications 7 à 11, dans lequel au moins l'un des corps de roulement est réalisé du côté frontal au moins dans la région de contact avec un renflement, en particulier un renflement intérieur du côté interne dans la région de contact est réalisé par rapport au renflement du côté frontal du corps de roulement avec un plus grand rayon de courbure.

13. Roulement à rouleaux coniques selon l'une quelconque des revendications 1 à 12, dans lequel le corps de roulement de forme tronconique est réalisé à partir de ses deux côtés frontaux avec une cavité respective, et il subsiste entre les cavités une région intermédiaire remplie du matériau du corps de roulement, dont l'épaisseur axiale minimale constitue entre 20% à 60% de la longueur axiale du corps de roulement, l'épaisseur axiale minimale constituant notamment entre 20% et 40% de la longueur axiale du corps de roulement, et en particulier un diamètre d'une région essentiellement cylindrique d'au moins l'une des cavités constituant entre 40% et 70% du diamètre extérieur du corps de roulement sur le côté frontal contenant l'ouverture de la cavité, et en particulier une épaisseur de paroi moyenne du corps de roulement dans la région d'au moins l'une des cavités constituant entre 15% et 30% du diamètre extérieur du corps de roulement sur le côté frontal contenant l'ouverture de la cavité, et notamment l'épaisseur de paroi dans la région essentiellement cylindrique de la cavité étant comprise entre 15% et 25%, la cavité présentant à l'extrémité axiale de plus grand diamètre du corps de roulement en particulier une plus grande profondeur axiale .que la cavité à l'extrémité axiale de plus petit diamètre du corps de roulement, et notamment au moins l'une des cavités étant réalisée sous forme sphérique vers la région intermédiaire, et/ou le corps de roulement étant réalisé notamment dans au moins une région de transition de son enveloppe extérieure vers l'un de ses côtés frontaux avec un arrondi adapté notamment à l'exigence de contrainte particulière.

14. Roulement à rouleaux coniques selon l'une quelconque des revendications 1 à 13, dans lequel le corps de roulement est réalisé sous forme venue de matière et d'une seule pièce, et/ou le corps de roulement est réalisé en acier ou en céramique.
